# EUROPEAN PATENT SPECIFICATION

(11) **EP 2 548 431 B1**
(45) Date of publication and mention of the grant of the patent: **18.06.2014**
(21) Application number: 12173080.8
(22) Date of filing: 22.06.2012
(51) Int. Cl.: A01D 41/12, A01D 43/08, A01D 47/00, A01D 67/00

(54) **Material transfer system**
Materialtransfersystem
Système de transfert de matériau

(30) Priority: 20.07.2011 US 201113187109
(43) Date of publication of application: 23.01.2013
(73) Proprietor: DEERE & COMPANY, Moline, Illinois 61265-8098 (US)
(72) Inventor: Anderson, Noel Wayne, Fargo, ND North Dakota 58102 (US); Sheidler, Alan D., Moline, IL Illinois 61265 (US)
(74) Representative: Holst, Sönke

(56) References cited:
- EP-A1- 2 210 470
- US-A1- 2008 245 042
- US-A1- 2010 326 746

## Description

The present invention relates to a material transfer system, and, more particularly, to a material transfer system that transfers grain to a container as the entire system is moving.

A grain harvesting combine includes a header, which cuts the crop and feeds it into a threshing rotor. The threshing rotor rotates within a perforated housing, performing a threshing operation of the grain from the crop directed there in to. Once the grain is threshed it falls through perforations in the housing onto a grain pan. From the grain pan the grain falls through a set of upper and lower sieves that are known as the cleaning shoe. The sieves are vibrating or oscillating causing clean grain to fall through for the purposes of collection of the grain and the removal of the chaff or other debris. The cleaning fan blows air through the sieves to discharge chaff toward the rear of the combine. Crop residue such as straw from the threshing section proceeds through a straw chopper and out the rear of the combine.

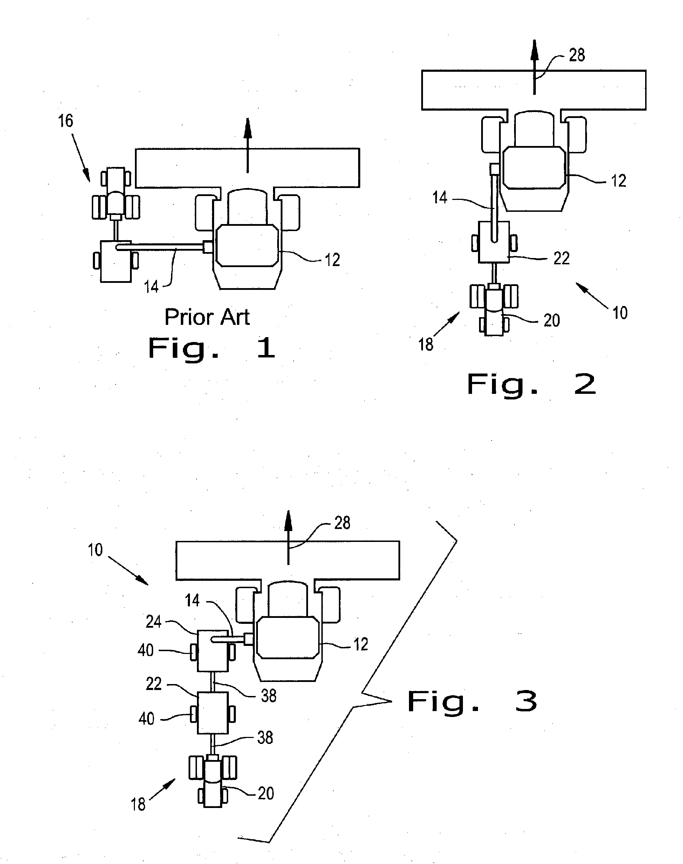

The clean grain is gathered into a clean grain reservoir and when the reservoir is full the operator interfaces with an operator of a grain hauling vehicle to transfer the grain from the reservoir to the grain hauling vehicle. As shown in Fig. 1, grain can be transferred as the harvester and the grain hauling vehicle are both moving in a forward direction.

If the harvester is stationary a skilled operator can back a vehicle to position it so that it can receive the grain from the harvester. A great deal of skill is required to back a straight truck in coordination with a harvesting machine and if the grain hauling vehicle is a tractor/grain cart combination. Even more skill is required if the grain hauling vehicle is a tractor/wagon combination. It is virtually impossible for an operator of any skill level to controllably back a grain hauling vehicle if the vehicle is a tractor with two grain containers connected in series. It is simply impossible for an operator to coordinate the backing of a tractor and a towed vehicle relative to a discharge auger of a harvester as the harvester is harvesting grain at a normal operating speed. The high speeds of both the harvester and the carts would require split second adjustments and when added to varying field conditions such as ruts and moisture, as well as poor visibility and limited ability to judge distance between the leading cart and header are but a few reasons why this is impossible to achieve using the prior art.

Automatic car parking systems are known where the car has no hitched element and the parking spot is in a fixed location. Also it is known to have a truck tractor and trailer system that backs up the rig to a stationary dock.

US 2010/0326746 A1 describes a harvester cooperating with a transport vehicle supporting a container during harvesting. The transport vehicle comprises driven, steerable wheels and is coupled with and powered by a self-propelled generator vehicle. The transport vehicle is automatically steered to move on paths parallel to the harvester path. At the end of the field, the harvester turns while the generator vehicle and the transport vehicle shift laterally onto the new path, and then move in the reverse direction.

What is needed in the art is an apparatus to transfer material such as grain to a moving container that is being operated in a reverse direction in an efficient economical manner.

A material transfer system comprises:
a first vehicle having a header and a material discharge device ;
a material receiving vehicle comprising a second vehicle being configured to move in a forward direction and a reverse direction,
the material receiving vehicle further comprising at least one towed container including a first towed container, said first towed container being coupled to said second vehicle such that said first towed container follows said second vehicle when said second vehicle moves in said forward direction; and
a control system coupled to at least one of said second vehicle and said at least one towed container, the control system operable to coordinate a movement of said second vehicle and said at least one towed container relative to said material discharge device as said first vehicle is moving in a forward direction and said material receiving vehicle is actively steered in said reverse direction on a path substantially parallel with the forward direction of the first vehicle allowing material to be transferred from the first vehicle to the towed container,
wherein the control system is operable to control the material receiving vehicle in a manner such that the path of the towed container is within the width of the header of the first vehicle.

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a schematical top view of a prior art two vehicle system utilizing a material transfer system;
Fig. 2 is a schematical top view of a two vehicle system utilizing an embodiment of a material transfer system of the present invention;
Fig 3 is a schematical top view of another two vehicle system utilizing the material transfer system of Fig. 2;
Fig 4 is a schematical top view of the two vehicle system utilizing the material transfer system of Fig. 3;
Fig 5 is a schematical top view illustrating another use of the material transfer system of Figs. 2-4;
Fig 6 is a schematical top view illustrating a use of a material transfer system not according to the invention with a bi-directional harvester;
Fig 7 is a schematical top view of the vehicle system utilizing the material transfer system of Figs. 2-5; and
Fig. 8 is a block diagram illustrating some of the interconnections of the material transfer system of Figs. 2-5, 7

Corresponding reference characters indicate corresponding parts throughout the several views. The exemplifications set out herein illustrate one embodiment of the invention and such exemplifications are not to be construed as limiting the scope of the invention in any manner.

Referring now to the drawings, and more particularly to Fig. 1, there is illustrated a prior art material transfer system with a material source vehicle 12 here illustrated as a harvester 12 having a material discharge device 14 that discharges grain into a material receiving vehicle 16, which is here illustrated as a tractor and grain cart. As harvester 12 is moving in the indicated direction the tractor and grain cart are also moving in the same normally forward direction.

Now, additionally referring to Figs. 2-7, there is illustrated an embodiment of a material transfer system 10 of the present invention including a material source vehicle 12 and a material receiving vehicle 18. Material receiving vehicle 18 includes a vehicle 20, a towed material container 22 and optionally additional towed material container 24 connected in series to towed material container 22. Additional towed material containers are also contemplated that can be connected in series, but are not illustrated. Towed material containers 22 and 24 are illustrated as grain carts, but other types of towed material containers are also contemplated. Material receiving vehicle 18, by way of this invention as further explained herein, backs towed material containers 22 and 24 in coordination with material source vehicle 12 so that material can be transferred to towed material containers 22 and 24 while material source vehicle 12 is moving in a forward direction 28 and towed material containers 22 and 24 are going in the same direction, which is a reverse direction to their normal direction of travel.

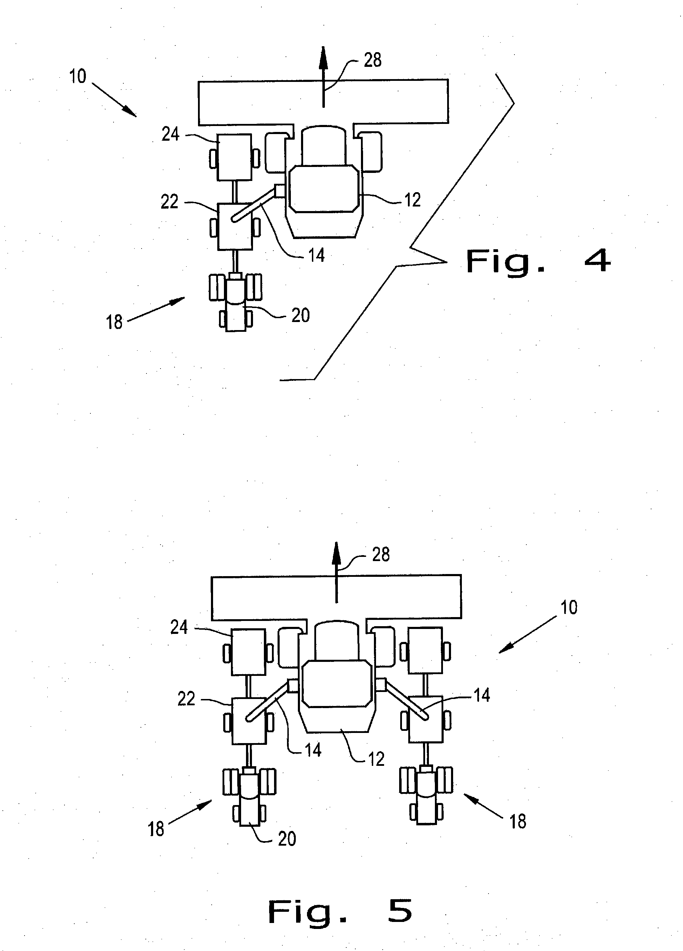

As illustrated in Fig. 4, towed material container 24 is traveling close to the header of material source vehicle 12 as towed material container 22 is being filed by discharge device 14. The present invention allows for the efficient coordination of movement of the entire material transfer system 10.

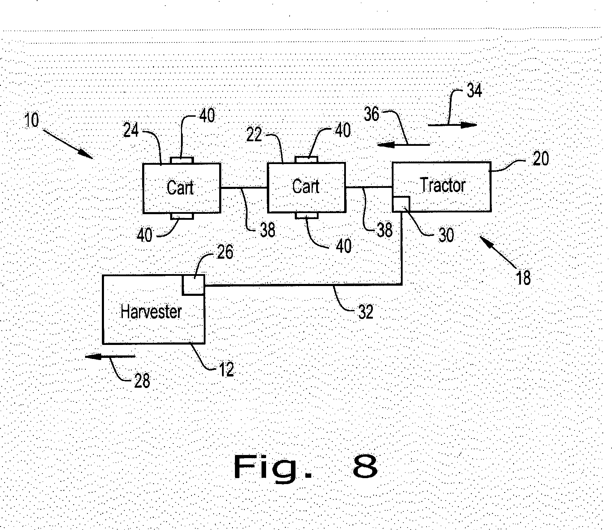

Now, additionally referring to Fig. 8, additional details of the present invention are illustrated in a schematic form. Material source vehicle 12 has a communicative controller 26 that is in communication with a communicative controller 30 coupled to vehicle 20. Information and/or control signals are sent by way of wireless link 32 so that communicative controller 30 receives information as to the current or future position of the end of discharge device 14, as well as any planned movements of material source vehicle 12 so as to preclude a collision between material source vehicle 12 and material receiving vehicle 18. Additionally, communicative controller 26 may control functions of material source vehicle 12, such as the preclusion of, or warning to an operator against, a sharp turn toward material receiving vehicle 18.

Vehicle 20 is connected to towed material container 22 by a tongue 38. Tongue 38 is pivotally connected to vehicle 20 and may be rigidly connected to towed material container 22. Tongue 38 also represents, for the purpose of discussion, a connection of a power transfer device and a communication link. The power transfer device may be in the form of hydraulic lines that allow the power plant of vehicle 20 to provide power to towed material container 22. It is also contemplated that power can be transferred by other connections such as electrical or pneumatic. The communication link allows communicative controller 30 to send control signals to towed material container 22 so that the backing of material receiving vehicle 18 can be accomplished in coordination with material source vehicle 12. Further, it is also contemplated that tongue 38 may be articulated and/or slid along a portion of towed material containers 22 and 24 as a way of effecting the steering control needed during the backing of material receiving vehicle 18.

Towed material containers 22 and 24 are each illustrated as having two wheels 40, which are ground engaging. Other ground engaging constructs are also contemplated such as more than two wheels and tracked constructs. Wheels 40 may be steerable and be under the control of the control signals sent thereto by communicative controller 30. Additionally, or instead of steerable wheels, wheels 40 can be separately powered to provide traction motive power to towed material containers 22 and 24. The separate powering of wheels 40 allow a skid-steer ability to towed material containers 22 and 24. The power supplied to wheels 40 as well as steering allows communicative controller 30 to send signals that coordinate the backing operation of material receiving vehicle 18. The reference herein to containers 22 and 24 as being "towed" is relative to the normal operation when material receiving vehicle 18 is proceeding in a direction 34, the consistent use of this term is for the purpose of uniformity and it is recognized that when material receiving vehicle 18 is moving in direction 36 that containers 22 and 24 are not being towed by vehicle 20. Vehicle 20 pushes tongue 38 or is pulled by tongue 38. A combination of physical pushing of tongue 38 and steering of wheels 40 and/or the powering of wheels 40 may be undertaken to provide the needed transfer of power along the steered pathway. Containers 22 and 24 may be self powered, such as with an on-board electrical generator. Containers 22 and 24 may also incorporate energy storage devices such as electrical battery, flywheel, pressurized gas chamber, or pressurized hydraulic fluid chamber. As material receiving vehicle 18 is moving in direction 36 communicative controller 30 controls the pathway taken in direction 36, which is substantially parallel with direction 28 as material receiving vehicle 18 approaches material source vehicle 12.

At least some of the power used to steer and/or move wheels 40 may come from an on-board power source or an on-board energy storage device. Power that is transferred to towed material containers 22 and 24 may be in the form of pressurized hydraulic fluid, pressurized gas or electricity.

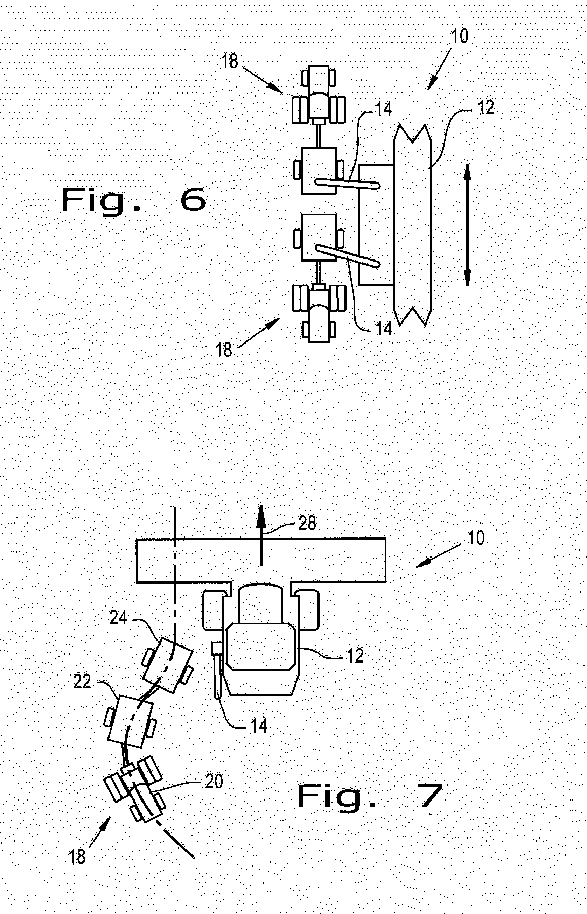

In Fig. 7, a pathway is shown for material receiving vehicle 18, which may take place as material receiving vehicle 18 positions towed material containers 22 and 24. Material source vehicle 12 may have passed material receiving vehicle, which was further to the left, then material receiving vehicle may have pulled in behind material source vehicle 12 and then upon engaging the present invention material receiving vehicle 18 is actively steered to a path that is substantially parallel with direction 28. Then in a sequential manner towed material containers 22 and 24 receive the material from material source vehicle 12. Communications take place between communicative controllers 26 and 30 to coordinate the transfer of material. Once the material has transferred, or upon direction from an operator, material receiving vehicle 18, under the direction of communicative controller 30, disengages from the choreographed backing and comes to a gentle stop. If vehicle 20 is manned by an operator control may then be returned to the operator.

In Fig. 6, material source vehicle 12 is a bidirectional cane harvester with two material receiving vehicles 18 in attendance not according to the invention. This illustrates the coordination of two vehicles, with one receiving cane billets and the other receiving cellulosic non-billet material.

Autonomous control of material receiving vehicle 18, coordinated with material source vehicle 12 improves the efficiency of material transfer. Preferably material receiving vehicle 18 has at least one material holding part which is detachable from a primary power source and the primary power source is in the rear relative to the direction of travel.

The problem of moving a grain/forage/cane cart in proximity to a combine/cane harvester is solved by the present invention by having the tractor back the cart in synchronization with the harvester rather than pull the cart. Because this is a virtually impossible task for even the most skilled operator, particularly with the speeds required and the poor visibilities of where the cart is near the combine, the autonomous guidance and safeguarding systems of the present invention are required.

Without limitation material source vehicle 12 could be a self-propelled forage harvester, a sugar cane harvester, a sugar beet harvester, a potato harvester, a hay baler, a cotton harvester, a rice harvester, a cut-to-length timber harvester, a mining machine, or a snow removal machine. Without limitation, material receiving vehicle 18 could be an agricultural tractor and one or more grain carts having one or more axels. In the description of the present invention, an agricultural tractor with one or more grain carts, each cart having one axle has been used. This simplification is for convenience in the description of the present invention, but one of ordinary skill in the art of vehicle trajectory control will be able to extend the invention to other hitch and axle configurations. In a preferred embodiment, wheels 40 of grain carts are powered as explained herein.

Two disadvantages of the prior art approach, as illustrated in Fig. 1, are first, the path of the tractor and grain cart extend beyond the width of the combine header. This causes problem for initial passes through a field to be harvested because material must be stored on the combine until the tractor/cart can pull along side the combine header. The second drawback is that only one grain cart can be pulled by the tractor because of space limitations in getting the cart within auger distance of the combine. This limits the material per tractor and tractor operator, decreasing efficiency and/or increasing costs. These two deficiencies are overcome by having the tractor push, rather than pull, the grain carts as shown in Figs. 2-7. Fig. 2 shows towed material container 22 behind material source vehicle 12 during an initial pass through a field. Fig. 3 illustrates multiple grain carts with a single tractor/operator. Fig. 4 illustrates an advantage of the multiple grain carts with the single tractor/operator, wherein the auger can now easily reach the multiple carts. Fig. 5 illustrates multiple grain carts with multiple tractors/operators and the resulting coordination of the grain carts which are positioned anywhere relative to the combine such that the auger can reach.

Fig. 6 also illustrates high throughput combines which require dual outlets for a single material or the ability to continuously discharge material while one receiving vehicle pulls away and another needs to be positioned. This also illustrates the situation when two material streams need to be handled, such as the above mentioned cane harvester, or for a corn harvester where one material stream is grain and the other material stream is cob or stalks.

The position, orientation and other state variables associated with vehicles 12 and 18 may be obtained by a variety of sensor combinations and placements that send information to communicative controllers 26 and 30. Sensed data may be combined with known geometry of vehicle elements to calculate positions of edges, wheels, drawbars, etc. as part of the implementation of the present invention limited by the content of the enclosed appended claims.

## Claims

1. A material transfer system comprising:
a first vehicle (12) having a header and a material discharge device (14);
a material receiving vehicle (18) comprising a second vehicle (20) being configured to move in a forward direction (34) and a reverse direction (36),
the material receiving vehicle (18) further comprising at least one towed container (22, 24) including a first towed container (22), said first towed container (22) being coupled to said second vehicle (20) such that said first towed container (22) follows said second vehicle (20) when said second vehicle (20) moves in said forward direction (34); and
a control system coupled to at least one of said second vehicle (20) and said at least one towed container (22), the control system operable to coordinate a movement of said second vehicle (20) and said at least one towed container (22) relative to said material discharge device (14) as said first vehicle (12) is moving in a forward direction (28) and said material receiving vehicle (18) is actively steered in said reverse direction (36) on a path substantially parallel with the forward direction (28) of the first vehicle (12) allowing material to be transferred from the first vehicle (12) to the towed container (22),
**characterized in that** the control system is operable to control the material receiving vehicle (18) in a manner such that the path of the towed container (22) is within the width of the header of the first vehicle (12).

2. The material transfer system of claim 1, wherein said first vehicle (12) is not physically connected to either said second vehicle (20) or to said at least one towed container (22).

3. The material transfer system of claim 1, wherein said at least one towed container (22, 24) additionally includes a second towed container (24) coupled to said first towed container (22).

4. The material transfer system of claim 3, wherein said at least one towed container (22, 24) is a grain cart.

5. The material transfer system of claim 4, wherein said first vehicle (12) is an agricultural harvester.

6. The material transfer system of claim 1, wherein said at least one towed container (22, 24) includes at least one of steerable wheels (40) and separately powered wheels (40).

7. The material transfer system of claim 6, wherein said second vehicle (20) provides power to said at least one towed container (22, 24) for at least one of steering said wheels (40) and powering said wheels (40).

8. The material transfer system of claim 7, wherein said power is in the form of at least one of pressurized hydraulic fluid, pressurized gas and electricity supplied from said second vehicle (20).

9. The material transfer system of claim 7, wherein said first towed container (22) has a tongue (38) that is coupled to said second vehicle (20), a reverse power being supplied to said first towed container (22) by a combination of said tongue (38) and said wheels (40) of said first towed container (22).

10. The material transfer system of claim 9, wherein said at least one towed container (22, 24) includes a second towed container (24) having a tongue (38) that is coupled to said first towed container (22), a reverse power being supplied to said second towed container (24) by a combination of said tongue (38) of said second towed container (24) and said wheels (40) of said second towed container (24).

## Patentansprüche

1. Materialtransfersystem, umfassend:
ein erstes Fahrzeug (12) mit einem Sammler und einer Materialausgabevorrichtung (14); ein Materialaufnahmefahrzeug (18), umfassend ein zweites Fahrzeug (20), das zum Bewegen in eine Vorwärtsrichtung (34) und eine Rückwärtsrichtung (36) konfiguriert ist,
wobei das Materialaufnahmefahrzeug (18) ferner mindestens einen gezogenen Behälter (22, 24) umfasst, der einen ersten gezogenen Behälter (22) aufweist, wobei der erste gezogene Behälter (22) mit dem zweiten Fahrzeug (20) gekoppelt ist, sodass der erste gezogene Behälter (22) dem zweiten Fahrzeug (20) folgt, wenn sich das zweite Fahrzeug (20) in die Vorwärtsrichtung (34) bewegt; und
ein Steuersystem, das mit mindestens entweder dem zweiten Fahrzeug (20) oder dem gezogenen Behälter (22) gekoppelt ist, wobei das Steuersystem betrieben werden kann, um eine Bewegung des zweiten Fahrzeugs (20) und des mindestens einen gezogenen Behälters (22) in Bezug auf die Materialausgabevorrichtung (14) zu koordinieren, wenn sich das erste Fahrzeug (12) in Vorwärtsrichtung (28) bewegt und das Materialaufnahmefahrzeug (18) aktiv in die Gegenrichtung (36) auf einem Pfad gelenkt wird, der im Wesentlichen parallel zu der Vorwärtsrichtung (28) des ersten Fahrzeugs (12) verläuft, damit das Material von dem ersten Fahrzeug (12) zu dem ersten gezogenen Behälter (22) transferiert werden kann,
**dadurch gekennzeichnet, dass**
das Steuersystem zum Steuern des Materialaufnahmefahrzeugs (18) auf eine Weise betrieben werden kann, dass der Pfad des gezogenen Behälters (22) innerhalb der Breite des Sammlers und des ersten Fahrzeugs (12) liegt.

2. Materialtransfersystem nach Anspruch 1, wobei das erste Fahrzeug (12) nicht physisch entweder mit dem zweiten Fahrzeug (20) oder dem mindestens einen gezogenen Behälter (22) verbunden ist.

3. Materialtransfersystem nach Anspruch 1, wobei der mindestens eine gezogene Behälter (22, 24) zusätzlich einen zweiten gezogenen Behälter (24) aufweist, der mit dem ersten gezogenen Behälter (22) gekoppelt ist.

4. Materialtransfersystem nach Anspruch 3, wobei der mindestens eine gezogene Behälter (22, 24) ein Kornwagen ist.

5. Materialtransfersystem nach Anspruch 4, wobei das erste Fahrzeug (12) ein Mähdrescher ist.

6. Materialtransfersystem nach Anspruch 1, wobei der mindestens eine gezogene Behälter (22, 24) mindestens entweder die lenkbaren Räder (40) oder getrennt angetriebenen Räder (40) aufweist.

7. Materialtransfersystem nach Anspruch 6, wobei das zweite Fahrzeug (20) dem mindestens einen gezogenen Behälter (22, 24) Energie liefert, um die Räder (40) entweder zu steuern oder die Räder (40) zu betreiben.

8. Materialtransfersystem nach Anspruch 7, wobei die Energie in Form mindestens eines von unter Druck stehendem Hydraulikfluid, Druckgas und aus dem zweiten Fahrzeug (20) zugeführter Elektrizität vorliegt.

9. Materialtransfersystem nach Anspruch 7, wobei der erste gezogene Behälter (22) einen Zapfen (38) aufweist, der mit dem zweiten Fahrzeug (20) gekoppelt ist, wobei dem ersten gezogenen Behälter (22) über eine Kombination aus Zapfen (38) und Rädern (40) des ersten gezogenen Behälters (22) eine Rückwärtsleistung zugeführt wird.

10. Materialtransfersystem nach Anspruch 9, wobei der mindestens eine gezogene Behälter (22, 24) einen zweiten gezogenen Behälter (24) mit einem Zapfen (38) aufweist, der mit dem ersten gezogenen Behälter (22) gekoppelt ist, wobei dem zweiten gezogenen Behälter (24) über eine Kombination aus dem Zapfen (38) des zweiten gezogenen Behälters (24) und den Rädern (40) des zweiten gezogenen Behälters (24) eine Rückwärtsleistung zugeführt wird.

## Revendications

1. Système de transfert de matériau comprenant :
un premier véhicule (12) ayant un collecteur et un dispositif de décharge de matériau (14) ;
un véhicule de réception de matériau (18) comprenant un deuxième véhicule (20) étant configuré pour se déplacer dans une direction vers l'avant (34) et une direction vers l'arrière (36),
le véhicule de réception de matériau (18) comprenant en outre au moins un conteneur remorqué (22, 24) incluant un premier conteneur remorqué (22), ledit premier conteneur remorqué (22) étant accouplé audit deuxième véhicule (20) de telle sorte que ledit premier conteneur remorqué (22) suive ledit deuxième véhicule (20) lorsque ledit deuxième véhicule (20) se déplace dans ladite direction vers l'avant (34) ; et
un système de commande accouplé à au moins l'un dudit deuxième véhicule (20) et dudit au moins un conteneur remorqué (22), le système de commande pouvant fonctionner pour coordonner un mouvement dudit deuxième véhicule (20) et dudit au moins un conteneur remorqué (20) par rapport audit dispositif de décharge de matériau (14) à mesure que ledit premier véhicule (12) se déplace dans une direction vers l'avant (28) et que ledit véhicule de réception de matériau (18) est dirigé activement dans ladite direction vers l'arrière (36) sur une trajectoire sensiblement parallèle à la direction vers l'avant (28) du premier véhicule (12), pour permettre à du matériau d'être transféré depuis le premier véhicule (12) jusqu'au conteneur remorqué (22),
**caractérisé en ce que** le système de commande peut fonctionner pour commander le véhicule de réception de matériau (18) de manière à ce que la trajectoire du conteneur remorqué (22) soit à l'intérieur de la largeur du collecteur du premier véhicule (12).

2. Système de transfert de matériau selon la revendication 1, dans lequel ledit premier véhicule (12) n'est pas connecté physiquement ni audit deuxième véhicule (20), ni audit au moins un conteneur remorqué (22).

3. Système de transfert de matériau selon la revendication 1, dans lequel ledit au moins un conteneur remorqué (22, 24) comporte en outre un deuxième conteneur remorqué (24) accouplé audit premier conteneur remorqué (22).

4. Système de transfert de matériau selon la revendication 3, dans lequel ledit au moins un conteneur remorqué (22, 24) est un chariot à grain.

5. Système de transfert de matériau selon la revendication 4, dans lequel ledit premier véhicule (12) est une moissonneuse agricole.

6. Système de transfert de matériau selon la revendication 1, dans lequel ledit au moins un conteneur remorqué (22, 24) comporte des roues dirigeables (40) et/ou des roues commandées en puissance séparément (40).

7. Système de transfert de matériau selon la revendication 6, dans lequel ledit deuxième véhicule (20) fournit de la puissance audit au moins un conteneur remorqué (22, 24) pour diriger lesdites roues (40) et/ou commander en puissance lesdites roues (40).

8. Système de transfert de matériau selon la revendication 7, dans lequel ladite puissance se présente sous la forme d'au moins un fluide hydraulique sous pression, un gaz sous pression et d'électricité fournie par ledit deuxième véhicule (20).

9. Système de transfert de matériau selon la revendication 7, dans lequel ledit premier conteneur remorqué (22) présente une langue (38) accouplée audit deuxième véhicule (20), une commande de puissance inverse étant fournie audit premier conteneur remorqué (22) par une combinaison de ladite langue (38) et desdites roues (40) dudit premier conteneur remorqué (22).

10. Système de transfert de matériau selon la revendication 9, dans lequel ledit au moins un conteneur remorqué (22, 24) comporte un deuxième conteneur remorqué (24) ayant une langue (38) accouplée audit premier conteneur remorqué (22), une commande de puissance inverse étant fournie audit deuxième conteneur remorqué (24) par une combinaison de ladite langue (38) dudit deuxième conteneur remorqué (24) et desdites roues (40) dudit deuxième conteneur remorqué (24).
